# EUROPEAN PATENT SPECIFICATION

(11) **EP 3 493 454 B1**
(45) Date of publication and mention of the grant of the patent: **02.12.2020**
(21) Application number: 18198530.0
(22) Date of filing: 08.06.2013
(51) Int. Cl.: H04L 5/00, H04B 7/04

(54) **PILOT SIGNAL TRANSMISSION METHOD AND SYSTEM**
PILOTSIGNALÜBERTRAGUNGSVERFAHREN UND SYSTEM
PROCÉDÉ DE TRANSMISSION DE SIGNAL PILOTE ET SYSTÈME

(43) Date of publication of application: 05.06.2019
(62) Divisional of application: 13886619.9
(73) Proprietor: Huawei Technologies Co., Ltd., Shenzhen, Guangdong 518129 (CN)
(72) Inventor: YANG, Jing, Shenzhen, Guangdong 518129 (CN); ZHANG, Jinlin, Shenzhen, Guangdong 518129 (CN)
(74) Representative: Körber, Martin Hans

(56) References cited:
- EP-A1- 2 341 637
- EP-A1- 2 587 687

## Description

### TECHNICAL FIELD

The present invention relates to the communications field, and in particular, to a pilot signal transmission method, a system comprising a base station and a user equipment.

### BACKGROUND

Theoretical analysis indicates that a channel capacity is enlarged with an increase of a quantity of antennas, and increasing a quantity of antennas at a transmit end can also achieve a better beamforming effect; therefore, a wireless transmission technology using more antennas for sending and receiving, that is, a multiple-input multiple-output (Multiple-Input and Multiple-Output, MIMO) technology, is always one of mainstream technologies studied in the field of mobile communications.

A reference signal, namely, a pilot signal, is a known signal provided by a transmit end for a receive end, and used by the receive end for channel estimation or channel measurement. Currently, a basic idea of the design of the pilot signal is that each port corresponds to one pilot signal. Such a one-to-one mapping manner is that each antenna transmits one pilot signal omnidirectionally.

In the MIMO technology, a quantity of ports increases with the increase of the quantity of antennas; if a separate pilot signal is allocated to each port in an existing pilot signal design manner, overheads of the pilot signals are quite large.

EP 2 587 687 A1 discloses a case of creating virtual sectors by using a physical sector. Classify multiple antennas in each physical sector among the three physical sectors into k groups, where each group forms two beams (that is, a first beam and a second beam; the number of formed beams is the number of formed virtual sectors), each beam points at a smaller sector, the first beam in each group points at the same direction and the second beam in each group also points at the same direction. And common pilots of each physical sector may be weighted by using two different sets of weights. The two different sets of weights correspond to two different cell IDs. A common pilot is adopted so that weighted common pilots are staggered in a frequency domain to reduce interference.

EP 2 341 637 A1 discloses a method for determining associated parameters of beam space. The method includes when the number of the antennas which need to send the common pilot signals is not more than the number of the antenna ports, the common pilot signals are respectively sent by the antennas through the antenna ports; or, when the number of the antennas which need to send the common pilot signals is more than the number of the antenna ports, the antennas are grouped, and the common pilot signals are sent by antennas of each groups through the antenna ports based on time division multiplex mode, wherein the number of the antennas in each group is not more than the number of antenna ports.

EP 2 925 042 A1 discloses a method, system, and device for transmitting a preamble signal and for signal measurement. The method includes a network side device, which transmits to the user equipment determined CSI feedback configurations, where one CSI feedback configuration corresponds to one CSI-RS resource, and the preamble signal corresponding to each port of the one CSI-RS resource is transmitted via one set of antenna unit corresponding to the port.

### SUMMARY

Embodiments of the present invention provide a pilot signal transmission method, which can be used to reduce overheads of pilot signals.

The present invention is defined by a pilot signal transmission method according to independent claim 1 and a system according to independent claim 4.

Additional features of the invention are provided in the dependent claims. In the following, parts of the description and drawings referring to embodiments which are not covered by the claims are not presented as embodiments of the invention, but as examples useful for understanding the invention.

According to a first aspect, a pilot signal transmission method is provided, including: determining m beams, and determining p ports corresponding to the m beams, where both m and p are positive integers greater than 1; and sending n pilot signals to a user equipment UE through q groups of ports, where the q groups are obtained by grouping the p ports based on that each group includes n ports, and both n and q are positive integers greater than 1; and the i^{th} port in each group is configured to send the i^{th} pilot signal in the n pilot signals, where 1≤i≤n, and i is a positive integer.

With reference to the first aspect, in a first possible implementation manner, the method further includes: grouping the p ports into the q groups according to directions of the m beams.

With reference to the first aspect or the first possible implementation manner of the first aspect, in a second possible implementation manner, the determining m beams includes: forming the m beams in an antenna weighting manner.

With reference to the second possible implementation manner of the first aspect, in a third possible implementation manner, the forming the m beams in an antenna weighting manner includes: weighting a group of co-polarized antennas respectively by using m weighted values, to form the m beams.

With reference to the second possible implementation manner of the first aspect, in a fourth possible implementation manner, the forming the m beams in a n antenna weighting manner includes: weighting a group of co-polarized antennas respectively by using k weighted values, where k is a positive integer greater than 1; weighting any two neighboring beams in the k beams by using a first weighted value, to form m/2 beams; and weighting any two neighboring beams in the k beams by using a second weighted value, to form m/2 beams.

With reference to the second possible implementation manner of the first aspect, in a fifth possible implementation manner, the forming the m beams in an antenna weighting manner includes: weighting a first group of co-polarized antennas respectively by using m/2 weighted values, to form m/2 beams; and weighting a second group of co-polarized antennas respectively by using the m/2 weighted values, to form m/2 beams, where a spacing exists between the first group of co-polarized antennas and the second group of co-polarized antennas.

With reference to the first aspect or any implementation manner of the first possible implementation manner to the fifth possible implementation manner of the first aspect, in a sixth possible implementation manner, before the sending n pilot signals to a UE through q groups of ports, the method further includes: determining x pilot signal configurations corresponding to the q groups of ports, where each group of the q groups is grouped into x subgroups, each subgroup includes y ports, the j^{th} subgroup in each group corresponds to the j^{th} pilot signal configuration in the x pilot signal configurations, and the pilot signal configuration is used to indicate a time-frequency resource occupied by a pilot signal, where both x and y are positive integers greater than or equal to 1, 1≤j≤x, and j is a positive integer; and sending signaling to the UE, where the signaling is used to indicate the x pilot signal configurations.

With reference to the sixth possible implementation manner of the first aspect, in a seventh possible implementation manner, the method further includes: receiving measurement information from the UE, where the measurement information includes x measurement results obtained by the UE through measurement on time-frequency resources respectively indicated by the x pilot signal configurations; determining a data transmission beam of the UE according to the measurement information and received uplink power of the q groups of ports; and sending data to the UE by using the data transmission beam of the UE.

With reference to the seventh possible implementation manner of the first aspect, in an eighth possible implementation manner, the determining a data transmission beam of the UE according to the measurement information and received uplink power of the q groups of ports includes: selecting an optimal measurement result from the x measurement results, and determining a candidate subgroup corresponding to the optimal measurement result, where the candidate subgroup includes at least one subgroup; selecting a subgroup with maximum received uplink power from the candidate subgroup according to the received uplink power of the q groups of ports; and determining the data transmission beam of the UE according to the optimal measurement result and the selected subgroup.

With reference to the seventh possible implementation manner or the eighth possible implementation manner of the first aspect, in a ninth possible implementation manner, each measurement result of the x measurement results includes a channel quality indicator CQI; or each measurement result includes a CQI, and at least one of the following: a rank and a precoding matrix indicator PMI.

With reference to the first aspect or any implementation manner of the first possible implementation manner to the ninth possible implementation manner of the first aspect, in a tenth possible implementation manner, the pilot signal is a channel state information-reference signal CSI-RS.

In the embodiments of the present invention, p ports corresponding to m beams are grouped into q groups, and n pilot signals are sent to a UE through the q groups of ports, where the i^{th} port in each group is configured to send the i^{th} pilot signal in the n pilot signals, so that a quantity of sent pilot signals decreases, thereby reducing overheads of the pilot signals.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a pilot signal transmission method according to an embodiment of the present invention;
FIG. 2 is a schematic diagram of an example of a scenario to which this embodiment of the present invention may be applied;
FIG. 3 is a schematic diagram of another example of a scenario to which this embodiment of the present invention may be applied;
FIG. 4 is a schematic diagram of another example of a scenario to which this embodiment of the present invention may be applied;
FIG. 5 is a schematic flowchart of a pilot signal transmission method according to another embodiment of the present invention;
FIG. 6 is a schematic block diagram of a base station according to an embodiment of the present invention;
FIG. 7 is a schematic block diagram of a UE according to an embodiment of the present invention;
FIG. 8 is a schematic block diagram of a base station according to another embodiment of the present invention; and
FIG. 9 is a schematic block diagram of a UE according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as: a Global System for Mobile Communications (Global System of Mobile communication, GSM), a Code Division Multiple Access (Code Division Multiple Access, CDMA) system, Wideband Code Division Multiple Access (Wideband Code Division Multiple Access Wireless, WCDMA), a general packet radio service (General Packet Radio Service, GPRS), and Long Term Evolution (Long Term Evolution, LTE).

A user equipment (User Equipment, UE) may also be referred to as a mobile terminal (Mobile Terminal, MT), a mobile user equipment, or the like, and may communicate with one or more core networks through a radio access network (for example, Radio Access Network, RAN). The user equipment may be a mobile terminal, such as a mobile phone (also referred to as a "cellular" phone) or a computer with a mobile terminal. For example, the user equipment may be a portable, pocket-sized, handheld, computer built-in, or in-vehicle mobile apparatus.

A base station may be a base station (Base Transceiver Station, BTS) in GSM or CDMA, may also be a base station (NodeB) in WCDMA, and may further be an evolved base station (evolved NodeB, eNB, or e-NodeB) in LTE, which is not limited in the present invention.

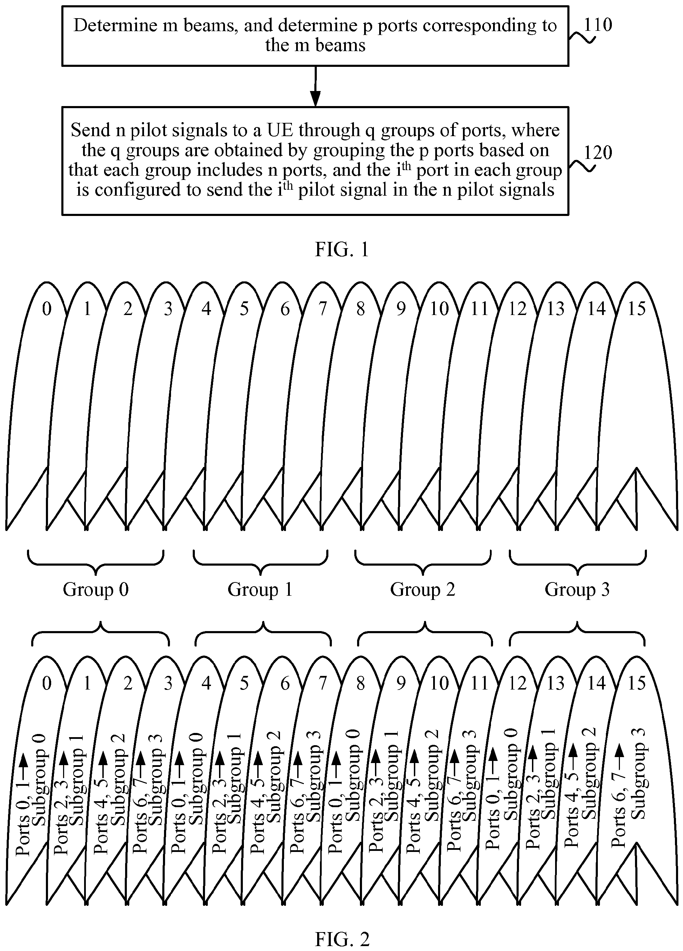

FIG. 1 is a schematic flowchart of a pilot signal transmission method according to an embodiment of the present invention. The method in FIG. 1 is performed by a base station.

110: Determine m beams, and determine p ports corresponding to the m beams, where both m and p are positive integers greater than 1.

For example, the base station may form the m beams in a weighting manner. The m beams may have different directions respectively. For example, in an active antenna system (Active Antenna System, AAS), the base station may form m beams in different directions in an antenna weighting manner.

Each beam may correspond to one or more ports. For example, in a case in which an antenna is a single polarization antenna, each beam may correspond to one port, so that the m beams may correspond to m ports. In a case in which an antenna is a cross polarization antenna, each beam may correspond to 2 ports, so that the m beams may correspond to m×2 ports.

120: Send n pilot signals to a UE through q groups of ports, where the q groups are obtained by grouping the p ports based on that each group includes n ports, and both n and q are positive integers greater than 1; and the i^{th} port in each group is configured to send the i^{th} pilot signal in the n pilot signals, where 1≤i≤n, and i is a positive integer.

For example, the base station may group the p ports according to directions of the m beams, so that the groups are staggered in space. For example, the base station may group each n neighboring ports into one group. It should be understood that, herein, grouping the p ports by the base station is substantially grouping the m beams. For example, assuming that there are 16 beams and each beam corresponds to 2 ports, the 16 beams correspond to 32 ports. The base station may group each 8 neighboring ports into one group, so as to obtain 4 groups of ports. That is, each beam may correspond to 2 ports; therefore, it may be understood that the base station groups each 4 neighboring beams into one group.

In each group of ports, the first port is configured to send the first pilot signal; the second port is configured to send the second pilot signal; and the rest may be deduced by analogy.

It can be seen from the above that, if an existing pilot signal design manner is used, that is, each port is mapped to one pilot signal, for the p ports, the base station needs to send p pilot signals to the UE. In this embodiment of the present invention, however, the base station may obtain the q groups of ports after grouping the p ports, where each group of ports includes n ports. Herein, both n and q are positive integers greater than 1; therefore, n is less than p. Then, the base station may send n pilot signals to the UE through the q groups of ports, where the i^{th} port in each group of ports is configured to send the i^{th} pilot signal in the n pilot signals, so that a quantity of pilot signals decreases, and therefore time-frequency resources occupied by the pilot signals are reduced, thereby reducing overheads of the pilot signals.

In this embodiment of the present invention, p ports corresponding to m beams are grouped into q groups, and n pilot signals are sent to a UE through the q groups of ports, where the i^{th} port in each group is configured to send the i^{th} pilot signal in the n pilot signals, so that a quantity of sent pilot signals decreases, thereby reducing overheads of the pilot signals.

Optionally, as an embodiment, the pilot signal may include a channel state information-reference signal (Channel State Information-Reference Signal, CSI-RS).

The pilot signal may further include another pilot signal that is only used for channel measurement. Because such a pilot signal, such as a CSI-RS, is only used for channel measurement the base station does not need to send the pilot signal omnidirectionally. Moreover, because a space interval exists between the m beams, the base station may send the pilot signal to the UE in a space division multiplexing manner.

Optionally, as an embodiment, before step 120, the base station may group the p ports into the q groups according to the directions of the m beams.

For example, the base station may group the p ports into the q groups, so that a space interval between the groups is large enough. The space interval between the groups may be determined according to an actual requirement, for example, may be determined according to transmission performance and overheads of pilot signals.

Optionally, as another embodiment, in step 110, the base station may form the m beams in an antenna weighting manner.

Optionally, as another embodiment, the base station may weight a group of co-polarized antennas respectively by using m weighted values, to form the m beams. A spacing, for example, 0.5 times of a wavelength, exists between the co-polarized antennas.

Optionally, as another embodiment, the base station may weight a group of co-polarized antennas respectively by using k weighted values, to form k beams, where k is a positive integer greater than 1. The base station may weight any two neighboring beams in the k beams by using a first weighted value, to form m/2 beams. The base station may weight any two neighboring beams in the k beams by using a second weighted value, to form m/2 beams.

For example, it is assumed that the base station forms 5 beams in an antenna weighting manner. The base station may weight each two neighboring beams in the 5 beams by using a weighted value W1, to form 4 beams. The base station may weight each two neighboring beams in the 5 beams by using a weighted value W2, to form the other 4 beams. In this way, the base station may determine 8 beams.

Optionally, as another embodiment, the base station may weight a first group of co-polarized antennas respectively by using m/2 weighted values, to form m/2 beams. The base station may weight a second group of co-polarized antennas respectively by using the m/2 weighted values, to form m/2 beams. A spacing exists between the first group of co-polarized antennas and the second group of co-polarized antennas.

For example, it is assumed that m is 8, and it is assumed that there are 16 cross polarization antennas, and there are 8 antennas in each polarization direction. A spacing, for example, a half wavelength, may exist between co-polarized antennas. The base station may group the 8 antennas in a horizontal polarization direction into two groups: group the first 4 antennas into one group, that is, a first group of co-polarized antennas, and group the last 4 antennas into one group, that is, a second group of co-polarized antennas. Therefore, a spacing between the first group of co-polarized antennas and the second group of co-polarized antennas is 2 times of the wavelength. In this way, the base station may weight the first group of co-polarized antennas respectively by using 4 weighted values: W1, W2, W3 and W4, to form 4 beams. The base station may weight the second group of co-polarized antennas respectively by using the 4 weighted values: W1, W2, W3 and W4, to form other 4 beams. In this way, the base station may determine 8 beams. Because the spacing between the first group of co-polarized antennas and the second group of co-polarized antennas is 2 times of the wavelength, a spacing between the 4 beams formed by weighting the first group of co-polarized antennas and the 4 beams formed by weighting the second group of co-polarized antennas is also 2 times of the wavelength.

In this embodiment, because the spacing exists between the first group of co-polarized antennas and the second group of co-polarized antennas, the spacing between the antennas can be used to distinguish the m/2 beams formed by weighting the first group of co-polarized antennas from the m/2 beams formed by weighting the second group of co-polarized antennas, so that this embodiment of the present invention is applicable to a scenario of larger-scale antennas.

Optionally, as another embodiment, before step 120, the base station may determine x pilot signal configurations corresponding to the q groups of ports, where each group of the q groups is grouped into x subgroups, each subgroup includes y ports, the j^{th} subgroup in each group corresponds to the j^{th} pilot signal configuration in the x pilot signal configurations, and the pilot signal configuration is used to indicate a time-frequency resource occupied by a pilot signal, where both x and y are positive integers greater than or equal to 1, 1≤j≤x, and j is a positive integer. The base station may send signaling to the UE, where the signaling may be used to indicate the x pilot signal configurations.

Specifically, each group of the q groups may be further grouped into x subgroups. That is, n ports in each group may be grouped into x subgroups. Each subgroup includes y ports. Because each group is grouped into x subgroups, the base station may determine that the x pilot signal configurations correspond to the q groups of ports, where a value of x may be less than a total quantity of pilot signal configurations in a protocol.

The j^{th} subgroup in each group may correspond to the j^{th} pilot signal configuration in the x pilot signal configurations. That is, in each group of ports, the first subgroup corresponds to the first pilot signal configuration; the second subgroup corresponds to the second pilot signal configuration; and the rest may be deduced by analogy. Therefore, in each group of ports, ports of different subgroups respectively correspond to different pilot signal configurations, so that pilot signals sent on ports of different subgroups occupy different time-frequency resources, which makes it convenient for the UE to measure the pilot signals.

For example, it is assumed that in step 110, the base station determines 16 beams, and each beam corresponds to 2 ports. The base station may group 32 ports into 4 groups, and each group includes 8 ports. Further, the base station may group 8 ports in each group into 4 subgroups. Each subgroup includes 2 ports. Because the 8 ports in each group are grouped into 4 subgroups, the base station may determine that 4 subgroups of ports correspond to 4 pilot signal configurations. In each group of ports, the first subgroup corresponds to the first pilot signal configuration, the second subgroup corresponds to the second pilot signal configuration, the third subgroup corresponds to the third pilot signal configuration, and the fourth subgroup corresponds to the fourth pilot signal configuration.

Further, as another embodiment, after step 120, the base station may receive measurement information from the UE, where the measurement information includes x measurement results obtained by the UE through measurement on time-frequency resources respectively indicated by the x pilot signal configurations. The base station may determine a data transmission beam of the UE according to the measurement information and received uplink power of the q groups of ports. The base station may send data to the UE by using the data transmission beam of the UE.

The UE may measure a pilot signal on a time-frequency resource indicated by each pilot signal configuration, so as to obtain the x measurement results. The base station may determine the data transmission beam of the UE based on these measurement results.

Optionally, as another embodiment, the base station may select an optimal measurement result from the x measurement results, and determine a candidate subgroup corresponding to the optimal measurement result. The base station may select a group with maximum received uplink power from the q groups. The base station may determine the data transmission beam of the UE according to the optimal measurement result, the candidate subgroup, and the group with the maximum received uplink power.

Optionally, as another embodiment, the base station may select an optimal measurement result from the x measurement results, and determine a candidate subgroup corresponding to the optimal measurement result, where the candidate subgroup includes at least one subgroup. The base station may select a subgroup with maximum received uplink power from the candidate subgroup according to the received uplink power of the q groups of ports. The base station may determine the data transmission beam of the UE according to the optimal measurement result and the selected subgroup.

Optionally, as another embodiment, each measurement result of the x measurement results includes a channel quality indicator (Channel Quality Indication, CQI).

Optionally, as another embodiment, each measurement result may include a CQI, and include at least one of the following: a rank (rank) and a precoding matrix indicator (Precoding Matrix Indicator, PMI). For example, the UE may determine, according to a transmission mode, whether to add a rank or a PMI to a measurement result.

Specifically, the base station may select the optimal measurement result from the x measurement results, for example, the base station may compare CQIs in the measurement results to determine an optimal CQI, thereby determining the optimal measurement result. The base station may determine, in the x pilot signal configurations according to the optimal measurement result, a candidate pilot signal configuration corresponding to the optimal measurement result, thereby determining the candidate subgroup corresponding to the optimal measurement result. Because each pilot signal configuration may correspond to multiple subgroups, the candidate subgroup herein may include multiple subgroups.

It can be known from the above that, multiple ports may send same pilot signals. For example, the first port in each group of ports is configured to send the first pilot signal. Therefore, in a time-frequency resource indicated by a pilot signal configuration, a pilot signal measured by the UE is substantially a signal obtained after pilot signals sent by multiple ports are superimposed. Therefore, after selecting the optimal measurement result and the corresponding candidate subgroup, the base station cannot determine the data transmission beam yet. The base station may select a group from the q groups according to received uplink power of each group of ports in the q groups. For example, because the p ports of the base station receive an uplink sounding (sounding) reference signal, the base station may compare the received uplink power of each group of ports in the q groups, so as to select a group with maximum received uplink power from the q groups. Then, the base station may determine the data transmission beam according to the optimal measurement result, the candidate subgroup and a beam corresponding to the group with the maximum received uplink power. For example, the base station may determine a subgroup belonging to the group with the maximum received uplink power from the candidate subgroup. Then, the base station may weight, by using a PMI in the optimal measurement result, a beam corresponding to the determined subgroup, so as to determine the data transmission beam. The base station may further select a subgroup with maximum received uplink power from the candidate subgroup. Then, the base station may weight, by using a PMI in the optimal measurement result, a beam corresponding to the selected subgroup, so as to determine the data transmission beam.

In a case in which ports in the determined subgroup correspond to multiple beams, the multiple beams corresponding to the subgroup are weighted by using the PMI in the optimal measurement result; because the PMI is changing, various data transmission beams can be formed.

After determining the data transmission beam of the UE, the base station may send data to the UE by using the data transmission beam. The UE may receive the data by using the data transmission beam, and may demodulate the data by using a user-specific reference signal (UE-specific Reference Signal, UE-specific RS).

The following describes in detail this embodiment of the present invention with reference to specific examples. It should be understood that, these examples are merely intended to help a person skilled in the art to better understand this embodiment of the present invention, rather than to limit the scope of this embodiment of the present invention.

FIG. 2 is a schematic diagram of an example of a scenario to which this embodiment of the present invention may be applied.

In FIG. 2, it is assumed that there are 32 cross polarization antennas, and there are 16 antennas in each polarization direction. The base station may form 16 beams in an antenna weighting manner. As shown in FIG. 2, the 16 beams may be represented as a beam 0 to a beam 15. Each beam corresponds to 2 ports. Therefore, the 16 beams correspond to 32 ports.

The base station may group the 32 ports into 4 groups, and each 8 neighboring ports are grouped into one group. That is, the base station may group the 16 beams into 4 groups, and each 4 neighboring beams are one group. That is, as shown in FIG. 2, the 4 groups may be respectively represented as a group 0, a group 1, a group 2 and a group 3.

For ease of description below, each group of ports may be represented by same numbers. Specifically, as shown in FIG. 2, in the group 0, ports corresponding to the beam 0 to the beam 3 may be numbered 0 to 7. In the group 1, ports corresponding to the beam 4 to the beam 7 may also be numbered 0 to 7. In the group 2, ports corresponding to the beam 8 to the beam 11 may also be numbered 0 to 7. In the group 3, ports corresponding to the beam 12 to the beam 15 may also be numbered 0 to 7.

In each group of ports, the ports may be configured to send different pilot signals. In the groups of ports, ports with a same number may be configured to send a same pilot signal. Specifically, the port 0 in the group 0, the port 0 in the group 1, the port 0 in the group 2 and the port 0 in the group 3 are all configured to send the first pilot signal; the port 1 in the group 0, the port 1 in the group 1, the port 1 in the group 2 and the port 1 in the group 3 are all configured to send the second pilot signal; and the rest may be deduced by analogy. It can be seen that, the base station may send 8 pilot signals to the UE through the 4 groups of ports.

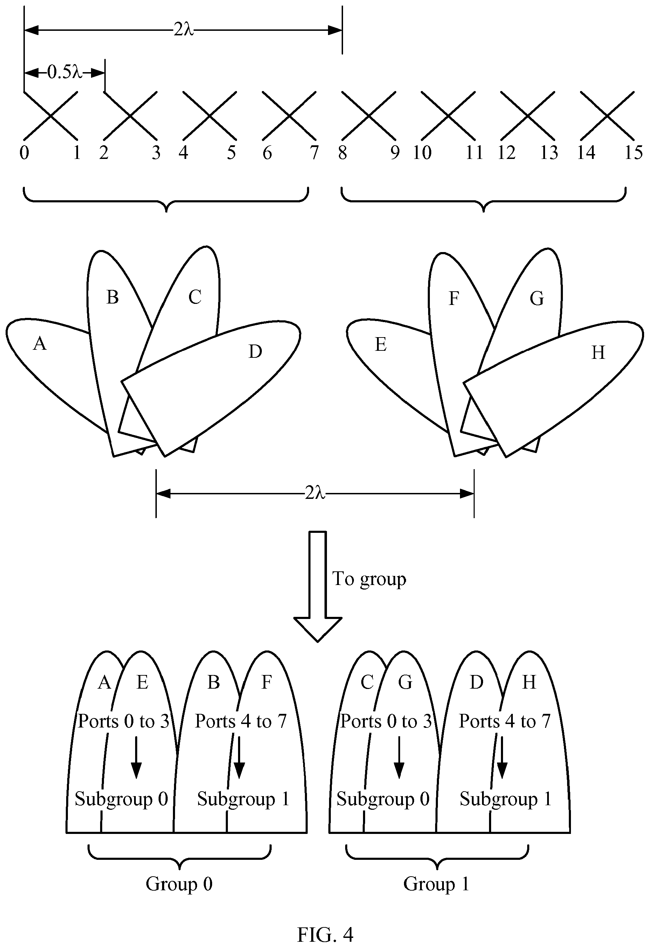

Optionally, each group of ports may be further grouped. That is, each group may be further grouped into 4 subgroups, and each subgroup may include 2 ports. Therefore, the 4 groups of ports may be further grouped into 16 subgroups. For ease of description below, in the group 0 to the group 3, the subgroups may be respectively numbered, that is, subgroups in different groups may be represented by same numbers. As shown in FIG. 2, 4 subgroups in the group 0 may be numbered 0 to 3, that is, a subgroup 0 to a subgroup 3. 4 subgroups in the group 1 may also be numbered as a subgroup 0 to a subgroup 3. 4 subgroups in the group 2 may also be numbered as a subgroup 0 to a subgroup 3. 4 subgroups in the group 3 may also be numbered as a subgroup 0 to a subgroup 3. The subgroup numbered 0 in each group may include the ports numbered 0 and 1 in the group, the subgroup numbered 1 in each group may include the ports numbered 2 and 3 in the group, the subgroup numbered 2 in each group may include the ports numbered 4 and 5 in the group, and the subgroup numbered 3 in each group may include the ports numbered 6 and 7 in the group. For example, in the group 0, the subgroup 0 may include the port 0 and the port 1 in the group 0, the subgroup 1 may include the port 2 and the port 3 in the group 0, the subgroup 2 may include the port 4 and the port 5 in the group 0, and the subgroup 3 may include the port 6 and 7 in the group 0. Other groups are similar to the group 0, and details are not provided again.

Each group is grouped into 4 subgroups, so that the 16 subgroups may correspond to 4 pilot signal configurations. The pilot signal configuration may indicate a time-frequency resource occupied by a pilot signal. Specifically, the subgroup 0 in the group 0, the subgroup 0 in the group 1, the subgroup 0 in the group 2 and the subgroup 0 in the group 3 may all correspond to the first pilot signal configuration; the subgroup 1 in the group 0, the subgroup 1 in the group 1, the subgroup 1 in the group 2 and the subgroup 1 in the group 3 may all correspond to the second pilot signal configuration; and the rest may be deduced by analogy.

The UE may measure, on time-frequency resources respectively indicated by the 4 pilot signal configurations, the 8 pilot signals sent by the base station. As shown in FIG. 2, on a time-frequency resource indicated by each pilot signal configuration, the UE may measure pilot signals that are sent by the base station on ports in subgroups with a same number. Specifically, the UE may measure, on a time-frequency resource indicated by the first pilot signal configuration, pilot signals sent on ports in the subgroups numbered 0. That is, the UE may measure, on the time-frequency resource indicated by the first pilot signal configuration, 2 pilot signals, that is, 2 pilot signals that are respectively sent by the base station on the port 0 and the port 1.

Similarly, the UE may measure, on a time-frequency resource indicated by the second pilot signal configuration, pilot signals sent on ports in the subgroups numbered 1. The UE may measure, on a time-frequency resource indicated by the third pilot signal configuration, pilot signals sent on ports in the subgroups numbered 2. The UE may measure, on a time-frequency resource indicated by the fourth pilot signal configuration, pilot signals sent on ports in the subgroups numbered 3.

In FIG. 2, the UE may measure 2 pilot signals on the time-frequency resource indicated by each pilot signal configuration, and each pilot signal is substantially a signal obtained after pilot signals sent on ports with a same number in the groups are superimposed. For example, on the time-frequency resource indicated by the first pilot signal configuration, the UE measures 2 pilot signals sent on 2 ports in the subgroup 0, where one pilot signal is substantially a signal obtained after pilot signals sent on the ports numbered 0 in the 4 groups of ports are superimposed, and the other pilot signal is substantially a signal obtained after pilot signals sent on the ports numbered 1 in the 4 groups of ports are superimposed.

The UE may obtain 4 measurement results after performing measurement respectively on time-frequency resources indicated by the 4 pilot signal configurations. Each measurement result may include a CQI. Each measurement result may further include at least one of the following: a rank and a PMI.

Then, the UE may send measurement information to the base station, where the measurement information may include the 4 measurement results.

The base station may determine a data transmission beam according to the measurement information, and send data to the UE by using the data transmission beam. Specifically, the base station may select an optimal measurement result from the 4 measurement results, and determine 4 subgroups corresponding to the optimal measurement result. Then the base station may select a group with maximum received uplink power from the group 0 to the group 3 according to respective received uplink power of the group 0 to the group 3. For example, the optimal measurement result selected by the base station is obtained through measurement on the time-frequency resource indicated by the first pilot signal configuration. The first pilot signal configuration may correspond to the 4 subgroups numbered 0 in the group 0 to the group 3. Because the 32 ports may all receive an uplink sounding reference signal, the base station may compare the respective received uplink power of the group 0 to the group 3, so as to determine the group with the maximum received uplink power. For example, it may be that received uplink power of a port in the group 1 is the maximum, so that the base station may determine, according to the 4 subgroups numbered 0 and the group 1, that the beam 4 is the data transmission beam. Then, the base station may weight the beam 4 by using a PMI, so as to determine the data transmission beam.

In this embodiment of the present invention, p ports corresponding to m beams are grouped into q groups, and n pilot signals are sent to a UE through the q groups of ports, where the i^{th} port in each group is configured to send the i^{th} pilot signal in the n pilot signals, so that a quantity of sent pilot signals decreases, thereby reducing overheads of the pilot signals.

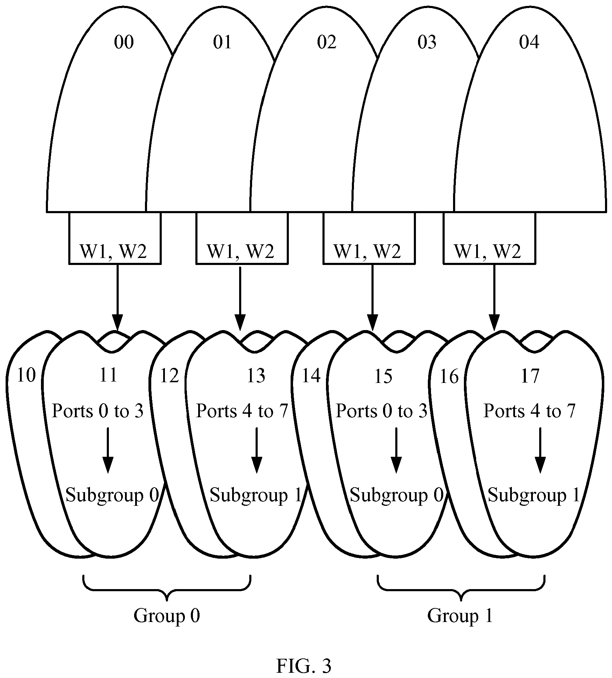

FIG. 3 is a schematic diagram of another example of a scenario to which this embodiment of the present invention may be applied.

In FIG. 3, it is assumed that there are 16 cross polarization antennas, and there are 8 antennas in each polarization direction. The base station may form 5 beams in an antenna weighting manner. As shown in FIG. 3, the 5 beams may be represented as a beam 00 to a beam 04.

The base station may weight each two neighboring beams in the 5 beams by using the weighted value W1 to obtain 4 beams. Specifically, the base station may weight the beam 00 and the beam 01 by using the weighted value W1 to obtain a beam 10, and weight the beam 01 and the beam 02 by using the weighted value W1 to obtain a beam 12, and the rest may be deduced by analogy. In this way, 4 beams, which respectively are beams 10, 12, 14 and 16, may be obtained.

The base station may weight each two neighboring beams in the 5 beams by using the weighted value W2 to obtain the other 4 beams. Specifically, the base station may weight the beam 00 and the beam 01 by using the weighted value W2 to obtain a beam 11, and weight the beam 01 and the beam 02 by using the weighted value W2 to obtain a beam 13, and the rest may be deduced by analogy. In this way, the other 4 beams, which respectively are beams 11, 13, 15 and 17, may be obtained.

In the beam 10 to the beam 17, each beam corresponds to 2 ports; therefore, the 8 beams may correspond to 16 ports.

The base station may group the 16 ports into 2 groups, and each 8 neighboring ports are grouped into one group. That is, the base station groups the 8 beams into 2 groups, and each group has 4 beams. As shown in FIG. 3, the 2 groups may be respectively represented as a group 0 and a group 1.

Similar to the embodiment in FIG. 2, for ease of description, each group of ports may be represented by same numbers. Specifically, as shown in FIG. 3, in the group 0, ports corresponding to the beam 10 to the beam 13 may be numbered 0 to 7. In the group 1, ports corresponding to the beam 14 to the beam 17 may also be numbered 0 to 7.

In each group of ports, the ports may be configured to send different pilot signals. In the groups, ports with a same number may be configured to send a same pilot signal. Specifically, both the port 0 in the group 0 and the port 0 in the group 1 are configured to send the first pilot signal; both the port 1 in the group 0 and the port 1 in the group 1 are configured to send the second pilot signal; and the rest may be deduced by analogy. It can be seen that, the base station may send 8 pilot signals to the UE through the 2 groups of ports.

Still similar to the embodiment in FIG. 2, each group of ports may be further grouped. That is, each group may be further grouped into 2 subgroups, and each subgroup may include 4 ports. Therefore, the 2 groups of ports may be further grouped into 4 subgroups. For ease of description below, in the group 0 and the group 1, the subgroups may be represented by same numbers. As shown in FIG. 3, 2 subgroups in the group 0 may be numbered 0 and 1, that is, a subgroup 0 and a subgroup 1. 2 subgroups in the group 1 may also be numbered as a subgroup 0 and a subgroup 1. The subgroup numbered 0 in each group may include the ports numbered 0 to 3 in the group, and the subgroup numbered 1 in each group may include the ports numbered 4 to 7 in the group. For example, in the group 0, the subgroup 0 may include the port 0, the port 1, the port 2 and the port 3 in the group 0, and the subgroup 1 may include the port 4, the port 5, the port 6 and the port 7 in the group 0. The group 1 is similar to the group 0, and details are not provided again.

Each group is grouped into 2 subgroups, so that the 4 subgroups may correspond to 2 pilot signal configurations. The pilot signal configuration may indicate a time-frequency resource occupied by a pilot signal. Specifically, both the subgroup 0 in the group 0 and the subgroup 0 in the group 1 may correspond to the first pilot signal configuration; both the subgroup 1 in the group 0 and the subgroup 1 in the group 1 may correspond to the second pilot signal configuration.

The following properly omits description of processes similar to those in the embodiment in FIG. 2. The UE may measure, on time-frequency resources respectively indicated by the 2 pilot signal configurations, the 8 pilot signals sent by the base station, so as to obtain 2 measurement results. Then, the UE may send measurement information to the base station, where the measurement information may include the 2 measurement results.

The base station may select an optimal measurement result from the 2 measurement results, and determine 2 subgroups corresponding to the optimal measurement result. Then, the base station may select a group with maximum received uplink power from the two groups according to respective received uplink power of the group 0 and the group 1. The base station may determine a subgroup belonging to the group with the maximum received uplink power from the 2 subgroups corresponding to the optimal measurement result. For example, it is assumed that the optimal measurement result is obtained through measurement on a time-frequency resource indicated by the second pilot signal configuration. The second pilot signal configuration corresponds to the 2 subgroups numbered 1. Received uplink power of a port in the group 1 is the maximum, so that the base station may determine a candidate data transmission beam, that is, 2 beams corresponding to the subgroup 1 in the group 1, that is, the beam 16 and the beam 17. The base station may weight the beam 16 and the beam 17 by using a PMI in the optimal measurement result, so as to determine a data transmission beam. In this embodiment, because the PMI is changing, the data transmission beam formed by means of weighting by the base station based on the PMI is also changing; therefore, various data transmission beams can be formed.

In this embodiment of the present invention, p ports corresponding to m beams are grouped into q groups, and n pilot signals are sent to a UE through the q groups of ports, where the i^{th} port in each group is configured to send the i^{th} pilot signal in the n pilot signals, so that a quantity of sent pilot signals decreases, thereby reducing overheads of the pilot signals.

FIG. 4 is a schematic diagram of another example of a scenario to which this embodiment of the present invention may be applied.

In FIG. 4, it is assumed that there are 16 cross polarization antennas, and there are 8 antennas in each polarization direction. As shown in FIG. 4, the 16 antennas may be respectively numbered 0 to 15. A spacing exists between two neighboring co-polarized antennas. For example, the spacing may be a half wavelength, that is, 0.5λ, where λ may represent a wavelength.

The base station may group co-polarized antennas into 2 groups: the first group of co-polarized antennas may include antennas 0, 2, 4 and 6, and the second group of co-polarized antennas may include antennas 8, 10, 12 and 14. The base station may weight the first group of co-polarized antennas respectively by using 4 weighted values, that is, weight the antennas 0, 2, 4 and 6 respectively by using the weighted values W1, W2, W3 and W4, to form 4 beams, which respectively are beams A, B, C and D. The base station may weight the second group of co-polarized antennas respectively by using the 4 weighted values, that is, weight the antennas 8, 10, 12 and 14 respectively by using the weighted values W1, W2, W3 and W4, to form other 4 beams, which respectively are beams E, F, G and H. It can be seen that, because a spacing between the first group of co-polarized antennas and the second group of co-polarized antennas is 2λ, a spacing between the beams A to D and the beams E to H is 2λ.

In the beam A to the beam H, each beam corresponds to 2 ports; therefore, the 8 beams may correspond to 16 ports.

The base station may group the 16 ports into 2 groups, where the 2 groups are respectively represented as a group 0 and a group 1. The group 0 includes 8 ports respectively corresponding to the beam A, the beam B, the beam E and the beam F, and the group 1 includes 8 ports respectively corresponding to the beam C, the beam D, the beam G and the beam H.

Similar to the embodiments in FIG. 2 and FIG. 3, for ease of description, each group of ports may be represented by same numbers. Specifically, as shown in FIG. 4, in the group 0, ports corresponding to the beam A are numbered 0 and 1, ports corresponding to the beam E may be numbered 2 and 3, ports corresponding to the beam B may be numbered 4 and 5, and ports corresponding to the beam F may be numbered 6 and 7. In the group 1, ports corresponding to the beam C may be numbered 0 and 1, ports corresponding to the beam G may be numbered 2 and 3, ports corresponding to the beam D may be numbered 4 and 5, and ports corresponding to the beam H may be numbered 6 and 7.

The following properly omits description of processes similar to those in the embodiments in FIG. 2 and FIG. 3. In each group of ports, the ports may be configured to send different pilot signals. In the groups, ports with a same number may be configured to send same pilot signals. Therefore, the base station may send 8 pilot signals to the UE through the 2 groups of ports.

Still similar to the embodiments in FIG. 2 and FIG. 3, each group of ports may be further grouped. That is, each group may be further grouped into 2 subgroups, and each subgroup may include 4 ports. Therefore, the 2 groups of ports may be further grouped into 4 subgroups. For ease of description below, in the group 0 and the group 1, the subgroups may be represented by same numbers. As shown in FIG. 4, 2 subgroups in the group 0 may be numbered 0 and 1, that is, a subgroup 0 and a subgroup 1. 2 subgroups in the group 1 may also be numbered as a subgroup 0 and a subgroup 1. The subgroup numbered 0 in each group may include the ports numbered 0 to 3 in the group, and the subgroup numbered 1 in each group may include the ports numbered 4 to 7 in the group. For example, in the group 0, the subgroup 0 may include the port 0, the port 1, the port 2 and the port 3 in the group 0, and the subgroup 1 may include the port 4, the port 5, the port 6 and the port 7 in the group 0. The group 1 is similar to the group 0, and details are not provided again.

Each group is grouped into 2 subgroups, so that the 4 subgroups may correspond to 2 pilot signal configurations. The pilot signal configuration may indicate a time-frequency resource occupied by a pilot signal. Specifically, both the subgroup 0 in the group 0 and the subgroup 0 in the group 1 may correspond to the first pilot signal configuration; both the subgroup 1 in the group 0 and the subgroup 1 in the group 1 may correspond to the second pilot signal configuration.

The UE may measure, on time-frequency resources respectively indicated by the 2 pilot signal configurations, the 8 pilot signals sent by the base station, so as to obtain 2 measurement results. Then, the UE may send measurement information to the base station, where the measurement information may include the 2 measurement results.

The base station may select an optimal measurement result from the 2 measurement results, and determine 2 subgroups corresponding to the optimal measurement result. Then, the base station may select a group with maximum received uplink power from the two groups according to respective received uplink power of the group 0 and the group 1. The base station may determine a subgroup belonging to the group with the maximum received uplink power from the 2 subgroups corresponding to the optimal measurement result. For example, it is assumed that the optimal measurement result is obtained through measurement on a time-frequency resource indicated by the second pilot signal configuration. The second pilot signal configuration corresponds to the 2 subgroups numbered 1. Received uplink power of a port in the group 1 is the maximum, so that the base station may determine a candidate data transmission beam, that is, 2 beams corresponding to the subgroup 1 in the group 1, that is, the beam D and the beam H. The base station may weight the beam D and the beam H by using a PMI in the optimal measurement result, so as to determine a data transmission beam. In this embodiment, because the PMI is changing, the data transmission beam formed by means of weighting by the base station based on the PMI is also changing; therefore, various data transmission beams can be formed.

In this embodiment of the present invention, p ports corresponding to m beams are grouped into q groups, and n pilot signals are sent to a UE through the q groups of ports, where the i^{th} port in each group is configured to send the i^{th} pilot signal in the n pilot signals, so that a quantity of sent pilot signals decreases, thereby reducing overheads of the pilot signals.

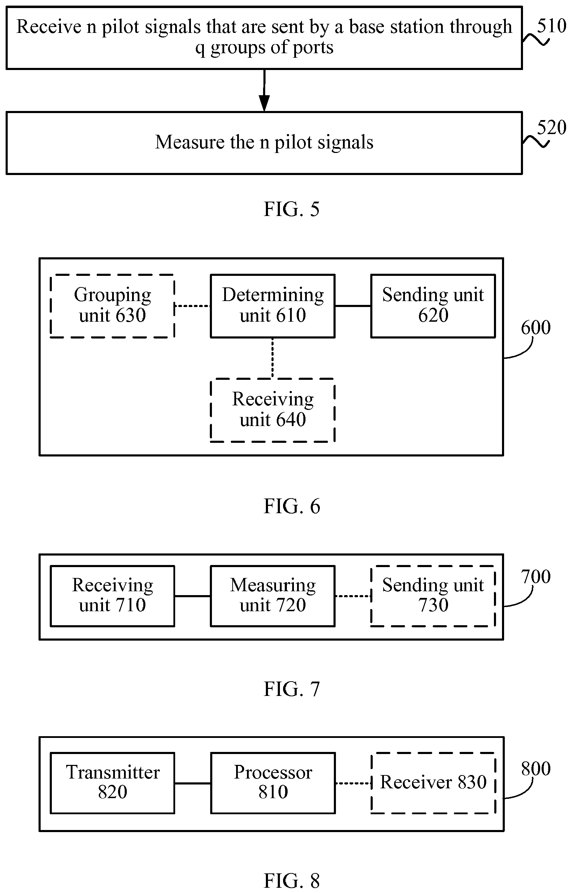

FIG. 5 is a schematic flowchart of a pilot signal transmission method according to another embodiment of the present invention. The method in FIG. 5 is performed by UE.

510: Receive n pilot signals that are sent by a base station through q groups of ports, where the q groups are obtained by the base station by grouping, based on that each group includes n ports, p ports corresponding to m beams, both m and p are positive integers greater than 1, and both n and q are positive integers greater than 1; and the i^{th} port in each group is configured to send the i^{th} pilot signal in the n pilot signals, where 1≤i≤n, and i is a positive integer.

520: Measure the n pilot signals.

In this embodiment of the present invention, n pilot signals that are sent by a base station through q groups of ports are received, where the i^{th} port in each group is configured to send the i^{th} pilot signal in the n pilot signals, so that a quantity of pilot signals decreases, thereby reducing overheads of the pilot signals.

Optionally, as an embodiment, before step 510, the UE may receive signaling sent by the base station, where the signaling is used to indicate x pilot signal configurations corresponding to the q groups of ports, where each group of the q groups is grouped into x subgroups, each subgroup includes y ports, the j^{th} subgroup in each group corresponds to the j^{th} pilot signal configuration in the x pilot signal configurations, and the pilot signal configuration is used to indicate a time-frequency resource occupied by a pilot signal, where both x and y are positive integers greater than or equal to 1, 1≤j≤x, and j is a positive integer.

Optionally, as another embodiment, in step 520, the UE may measure the n pilot signals on time-frequency resources respectively indicated by the x pilot signal configurations, to obtain x measurement results. After step 520, the UE may send measurement information to the base station, where the measurement information includes the x measurement results.

Optionally, as another embodiment, the UE may receive, by using a data transmission beam, data sent by the base station, where the data transmission beam is determined by the base station according to the measurement information and received uplink power of the q groups of ports.

Optionally, as another embodiment, each measurement result of the x measurement results may include a CQI; or each measurement result may include a CQI, and at least one of the following: a rank and a PMI.

Optionally, as another embodiment, the pilot signal may be a CSI-RS.

FIG. 6 is a schematic block diagram of a base station according to an embodiment of the present invention. Abase station 600 in FIG. 6 includes a determining unit 610 and a sending unit 620.

The determining unit 610 determines m beams, and determines p ports corresponding to the m beams, where both m and p are positive integers greater than 1; and the sending unit 620 sends n pilot signals to a UE through q groups of ports, where the q groups are obtained by grouping the p ports based on that each group includes n ports, and both n and q are positive integers greater than 1; and the i^{th} port in each group is configured to send the i^{th} pilot signal in the n pilot signals, where 1≤i≤n, and i is a positive integer.

In this embodiment of the present invention, p ports corresponding to m beams are grouped into q groups, and n pilot signals are sent to a UE through the q groups of ports, where the i^{th} port in each group is configured to send the i^{th} pilot signal in the n pilot signals, so that a quantity of sent pilot signals decreases, thereby reducing overheads of the pilot signals.

Optionally, as an embodiment, the base station 600 may further include a grouping unit 630. The grouping unit 630 may group the p ports into the q groups according to directions of the m beams.

Optionally, as another embodiment, the determining unit 610 may form the m beams in an antenna weighting manner.

Optionally, as another embodiment, the determining unit 610 may weight a group of co-polarized antennas respectively by using m weighted values, to form the m beams.

Optionally, as another embodiment, the determining unit 610 may weight a group of co-polarized antennas respectively by using k weighted values, to form k beams, where k is a positive integer greater than 1; may weight any two neighboring beams in the k beams by using a first weighted value, to form m/2 beams; and may weight any two neighboring beams in the k beams by using a second weighted value, to form m/2 beams.

Optionally, as another embodiment, the determining unit 610 may weight a first group of co-polarized antennas respectively by using m/2 weighted values, to form m/2 beams; and weight a second group of co-polarized antennas respectively by using the m/2 weighted values, to form m/2 beams, where a spacing exists between the first group of co-polarized antennas and the second group of co-polarized antennas.

Optionally, as another embodiment, the determining unit 610 may further determine x pilot signal configurations corresponding to the q groups of ports before the sending unit 620 sends the n pilot signals to the UE through the q groups of ports, where each group of the q groups is grouped into x subgroups, each subgroup includes y ports, the j^{th} subgroup in each group corresponds to the j^{th} pilot signal configuration in the x pilot signal configurations, and the pilot signal configuration is used to indicate a time-frequency resource occupied by a pilot signal, where both x and y are positive integers greater than or equal to 1, 1≤j≤x, and j is a positive integer; and the sending unit 620 may further send signaling to the UE, where the signaling is used to indicate the x pilot signal configurations.

Optionally, as another embodiment, the base station 600 may further include a receiving unit 640. The receiving unit 640 may receive measurement information from the UE, where the measurement information includes x measurement results obtained by the UE through measurement on time-frequency resources respectively indicated by the x pilot signal configurations. The determining unit 610 may further determine a data transmission beam according to the measurement information received by the receiving unit 640 and received uplink power of the q groups of ports. The sending unit 620 may further send data to the UE by using the data transmission beam.

Optionally, as another embodiment, the determining unit 610 may select an optimal measurement result from the x measurement results, and determine a candidate subgroup corresponding to the optimal measurement result, where the candidate subgroup includes at least one subgroup; may select a subgroup with maximum received uplink power from the candidate subgroup according to the received uplink power of the q groups of ports; and may determine the data transmission beam of the UE according to the optimal measurement result and the selected subgroup.

Optionally, as another embodiment, each measurement result of the x measurement results may include a CQI; or each measurement result may include a CQI, and at least one of the following: a rank and a PMI.

Optionally, as another embodiment, the pilot signal may be a CSI-RS.

For other functions and operations of the base station 600, reference may be made to the processes involving a base station in the foregoing method embodiments in FIG. 1 to FIG. 4, and details are not provided again to prevent repetition.

FIG. 7 is a schematic block diagram of UE according to an embodiment of the present invention. A UE 700 in FIG. 7 includes a receiving unit 710 and a measuring unit 720.

The receiving unit 710 receives n pilot signals that are sent by a base station through q groups of ports, where the q groups are obtained by the base station by grouping, based on that each group includes n ports, p ports corresponding to m beams, both m and p are positive integers greater than 1, and both n and q are positive integers greater than 1; and the i^{th} port in each group is configured to send the i^{th} pilot signal in the n pilot signals, where 1≤i≤n, and i is a positive integer. The measuring unit 720 measures the n pilot signals received by the receiving unit 710.

In this embodiment of the present invention, n pilot signals that are sent by a base station through q groups of ports are received, where the i^{th} port in each group is configured to send the i^{th} pilot signal in the n pilot signals, so that a quantity of pilot signals decreases, thereby reducing overheads of the pilot signals.

Optionally, as an embodiment, the receiving unit 710 may further receive signaling sent by the base station before receiving the n pilot signals that are sent by the base station through the q groups of ports, where the signaling is used to indicate x pilot signal configurations corresponding to the q groups of ports, each group of the q groups is grouped into x subgroups, each subgroup includes y ports, the j^{th} subgroup in each group corresponds to the j^{th} pilot signal configuration in the x pilot signal configurations, and the pilot signal configuration is used to indicate a time-frequency resource occupied by a pilot signal, where both x and y are positive integers greater than or equal to 1, 1≤j≤x, and j is a positive integer.

Optionally, as another embodiment, the UE 700 may further include a sending unit 730.

The measuring unit 720 may measure the n pilot signals on time-frequency resources respectively indicated by the x pilot signal configurations, to obtain x measurement results.

The sending unit 730 may send measurement information to the base station, where the measurement information includes the x measurement results.

Optionally, as another embodiment, the receiving unit 710 may further receive, by using a data transmission beam, data sent by the base station, where the data transmission beam is determined by the base station according to the measurement information and received uplink power of the q groups of ports.

Optionally, as another embodiment, each measurement result of the x measurement results may include a CQI; or each measurement result may include a CQI, and at least one of the following: a rank and a PMI.

Optionally, as another embodiment, the pilot signal may be a CSI-RS.

For other functions and operations of the UE 700, reference may be made to the processes involving UE in the foregoing method embodiments in FIG. 1 to FIG. 5, and details are not provided again to prevent repetition.

FIG. 8 is a schematic block diagram of a base station according to another embodiment of the present invention. Abase station 800 in FIG. 8 includes a processor 810 and a transmitter 820.

The processor 810 determines m beams, and determines p ports corresponding to the m beams, where both m and p are positive integers greater than 1; and the transmitter 820 sends n pilot signals to UE through q groups of ports, where the q groups are obtained by grouping the p ports based on that each group includes n ports, and both n and q are positive integers greater than 1; and the i^{th} port in each group is configured to send the i^{th} pilot signal in the n pilot signals, where 1≤i≤n, and i is a positive integer.

In this embodiment of the present invention, p ports corresponding to m beams are grouped into q groups, and n pilot signals are sent to UE through the q groups of ports, where the i^{th} port in each group is configured to send the i^{th} pilot signal in the n pilot signals, so that a quantity of sent pilot signals decreases, thereby reducing overheads of the pilot signals.

Optionally, as an embodiment, the processor 810 may further group the p ports into the q groups according to directions of the m beams.

Optionally, as another embodiment, the processor 810 may form the m beams in an antenna weighting manner.

Optionally, as another embodiment, the processor 810 may weight a group of co-polarized antennas respectively by using m weighted values, to form the m beams.

Optionally, as another embodiment, the processor 810 may weight a group of co-polarized antennas respectively by using k weighted values, to form k beams, where k is a positive integer greater than 1; weight any two neighboring beams in the k beams by using a first weighted value, to form m/2 beams; and weight any two neighboring beams in the k beams by using a second weighted value, to form m/2 beams.

Optionally, as another embodiment, the processor 810 may weight a first group of co-polarized antennas respectively by using m/2 weighted values, to form m/2 beams; and weight a second group of co-polarized antennas respectively by using the m/2 weighted values, to form m/2 beams, where a spacing exists between the first group of co-polarized antennas and the second group of co-polarized antennas.

Optionally, as another embodiment, the processor 810 may further determine x pilot signal configurations corresponding to the q groups of ports before the transmitter 820 sends the n pilot signals to the UE through the q groups of ports, where each group of the q groups is grouped into x subgroups, each subgroup includes y ports, the j^{th} subgroup in each group corresponds to the j^{th} pilot signal configuration in the x pilot signal configurations, and the pilot signal configuration is used to indicate a time-frequency resource occupied by a pilot signal, where both x and y are positive integers greater than or equal to 1, 1≤j≤x, and j is a positive integer; and the transmitter 820 may further send signaling to the UE, where the signaling is used to indicate the x pilot signal configurations.

Optionally, as another embodiment, the base station 800 may further include a receiver 830. The receiver 830 may receive measurement information from the UE, where the measurement information includes x measurement results obtained by the UE through measurement on time-frequency resources respectively indicated by the x pilot signal configurations. The processor 810 may further determine a data transmission beam of the UE according to the measurement information received by the receiver 830 and received uplink power of the q groups of ports. The transmitter 820 may further send data to the UE by using the data transmission beam of the UE.

Optionally, as another embodiment, the processor 810 may select an optimal measurement result from the x measurement results, and determine a candidate subgroup corresponding to the optimal measurement result, where the candidate subgroup includes at least one subgroup; may select a subgroup with maximum received uplink power from the candidate subgroup according to the received uplink power of the q groups of ports; and may determine the data transmission beam of the UE according to the optimal measurement result and the selected subgroup.

Optionally, as another embodiment, each measurement result of the x measurement results may include a CQI; or each measurement result may include a CQI, and at least one of the following: a rank and a PMI.

Optionally, as another embodiment, the pilot signal may be a CSI-RS.

For other functions and operations of the base station 800, reference may be made to the processes involving a base station in the foregoing method embodiments in FIG. 1 to FIG. 4, and details are not provided again to prevent repetition.

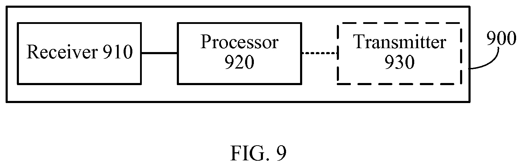

FIG. 9 is a schematic block diagram of UE according to another embodiment of the present invention. A UE 900 in FIG. 9 includes a receiver 910 and a processor 920.

The receiver 910 receives n pilot signals that are sent by a base station through q groups of ports, where the q groups are obtained by the base station by grouping, based on that each group includes n ports, p ports corresponding to m beams, both m and p are positive integers greater than 1, and both n and q are positive integers greater than 1; and the i^{th} port in each group is configured to send the i^{th} pilot signal in the n pilot signals, where 1≤i≤n, and i is a positive integer. The processor 920 measures the n pilot signals received by the receiver 910.

In this embodiment of the present invention, n pilot signals that are sent by a base station through q groups of ports are received, where the i^{th} port in each group is configured to send the i^{th} pilot signal in the n pilot signals, so that a quantity of pilot signals decreases, thereby reducing overheads of the pilot signals.

Optionally, as an embodiment, the receiver 910 may further receive signaling sent by the base station before receiving the n pilot signals that are sent by the base station through the q groups of ports, where the signaling is used to indicate x pilot signal configurations corresponding to the q groups of ports, each group of the q groups is grouped into x subgroups, each subgroup includes y ports, the j^{th} subgroup in each group corresponds to the j^{th} pilot signal configuration in the x pilot signal configurations, and the pilot signal configuration is used to indicate a time-frequency resource occupied by a pilot signal, where both x and y are positive integers greater than or equal to 1, 1≤j≤x, and j is a positive integer.

Optionally, as another embodiment, the UE 900 may further include a transmitter 930.

The processor 920 may measure the n pilot signals on time-frequency resources respectively indicated by the x pilot signal configurations, to obtain x measurement results.

The transmitter 930 may send measurement information to the base station, where the measurement information includes the x measurement results.

Optionally, as another embodiment, the receiver 910 may further receive, by using a data transmission beam, data sent by the base station, where the data transmission beam is determined by the base station according to the measurement information and received uplink power of the q groups of ports.

Optionally, as another embodiment, each measurement result of the x measurement results may include a CQI; or each measurement result may include a CQI, and at least one of the following: a rank and a PMI.

Optionally, as another embodiment, the pilot signal may be a CSI-RS.

For other functions and operations of the UE 900, reference may be made to the processes involving UE in the foregoing method embodiments in FIG. 1 to FIG. 5, and details are not provided again to prevent repetition.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not provided herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A pilot signal transmission method, comprising:
receiving (510) n pilot signals sent from a base station through q groups of ports, wherein the q groups are obtained by the base station by grouping, based on that each group comprises n ports, p ports into the q groups according to directions of m beams, both m and p are positive integers greater than 1, and both n and q are positive integers greater than 1; and the i^{th} port in each group is configured to send the i^{th} pilot signal in the n pilot signals, wherein 1≤i≤n, and i is a positive integer; and
measuring (520) the n pilot signals,
wherein, before the receiving n pilot signals from a base station through q groups of ports, the method further comprises:
receiving signaling from the base station, wherein the signaling is used to indicate x pilot signal configurations corresponding to the q groups of ports, each group of the q groups is grouped into x subgroups, each subgroup comprises y ports, the j^{th} subgroup in each group corresponds to the j^{th} pilot signal configuration in the x pilot signal configurations, and the pilot signal configuration is used to indicate a time-frequency resource occupied by a pilot signal, wherein both x and y are positive integers greater than or equal to 1, 1≤j≤x, and j is a positive integer,
wherein the measuring the n pilot signals comprises:
measuring the n pilot signals on time-frequency resources respectively indicated by the x pilot signal configurations, to obtain x measurement results; and
wherein the method further comprises:
sending measurement information to the base station, wherein the measurement information comprises the x measurement results; and
receiving, by using a data transmission beam, data from the base station, wherein the data transmission beam is determined by the base station according to the measurement information and received uplink power of the q groups of ports.

2. The method according to claim 1, wherein each measurement result of the x measurement results comprises a channel quality indicator, CQI; or
each measurement result of the x measurement results comprises a CQI, and at least one of the following: a rank and a precoding matrix indicator, PMI.

3. The method according to any one of claims 1 to 2, wherein each of the n pilot signals is a channel state information-reference signal, CSI-RS.

4. A system, comprising:
a base station, configured to:
determine m beams, and determine p ports corresponding to the m beams, wherein both m and p are positive integers greater than 1; and
send n pilot signals to a user equipment, UE, through q groups of ports, wherein the q groups are obtained by grouping the p ports according to directions of m beams and based on that each group comprises n ports, and both n and q arc positive integers greater than 1; and the i^{th} port in each group is configured to send the i^{th} pilot signal in the n pilot signals, wherein 1≤i≤n, and i is a positive integer; and
the user equipment, configured to:
receive signaling from the base station, wherein the signaling is used to indicate x pilot signal configurations corresponding to the q groups of ports, each group of the q groups is grouped into x subgroups, each subgroup comprises y ports, the jth subgroup in each group corresponds to the jth pilot signal configuration in the x pilot signal configurations, and the pilot signal configuration is used to indicate a time-frequency resource occupied by a pilot signal, wherein both x and y are positive integers greater than or equal to 1, 1≤j≤x, and j is a positive integer;
receive the n pilot signals from the base station through the q groups of ports;
measure the n pilot signals by measuring the n pilot signals on time-frequency resources respectively indicated by the x pilot signal configurations, to obtain x measurement results;
send measurement information to the base station, wherein the measurement information comprises the x measurement results; and
receive, by using a data transmission beam, data from the base station, wherein the data transmission beam is determined by the base station according to the measurement information and received uplink power of the q groups of ports.

5. The system according to claim 4, wherein the pilot signal is a channel state information-reference signal, CSI-RS.

## Patentansprüche

1. Pilotsignal-Übertragungsverfahren, umfassend:
Empfangen (510) von n Pilotsignalen, die von einer Basisstation über q Gruppen von Ports gesendet werden, wobei die q Gruppen durch die Basisstation erhalten werden, indem, basierend darauf, dass jede Gruppe n Ports umfasst, p Ports gemäß Richtungen von m Strahlen zu den q Gruppen gruppiert werden, wobei sowohl m als auch p positive Ganzzahlen größer als 1 sind und sowohl n als auch q positive Ganzzahlen größer als 1 sind; und der i-te Port in jeder Gruppe dafür ausgelegt ist, das i-te Pilotsignal in den n Pilotsignalen zu senden, wobei 1≤i≤n und i eine positive Ganzzahl ist; und
Messen (520) der n Pilotsignale,
wobei vor dem Empfangen von n Pilotsignalen von einer Basisstation über q Gruppen von Ports das Verfahren ferner umfasst:
Empfangen einer Signalisierung von der Basisstation, wobei die Signalisierung dazu verwendet wird, x Pilotsignalkonfigurationen entsprechend den q Gruppen von Ports anzuzeigen, jede Gruppe der q Gruppen zu x Untergruppen gruppiert ist, jede Untergruppe y Ports umfasst, die j-te Untergruppe in jeder Gruppe der j-ten Pilotsignalkonfiguration in den x Pilotsignalkonfigurationen entspricht und die Pilotsignalkonfiguration dazu verwendet wird, eine Zeit-Frequenz-Ressource anzuzeigen, die durch ein Pilotsignal belegt ist, wobei sowohl x als auch y positive Ganzzahlen größer oder gleich 1 sind, 1≤i≤x und j eine positive Ganzzahl ist,
wobei das Messen der n Pilotsignale umfasst:
Messen der n Pilotsignale in Zeit-Frequenz-Ressourcen, die jeweils durch die x Pilotsignalkonfigurationen angezeigt werden, um x Messergebnisse zu erhalten; und
wobei das Verfahren ferner umfasst:
Senden von Messinformationen an die Basisstation, wobei die Messinformationen die x Messergebnisse umfassen; und
Empfangen, unter Verwendung eines Datenübertragungsstrahls, von Daten von der Basisstation, wobei der Datenübertragungsstrahl durch die Basisstation gemäß den Messinformationen und der empfangenen "Uplink"-Leistung der q Gruppen von Ports bestimmt wird.

2. Verfahren gemäß Anspruch 1, wobei jedes Messergebnis der x Messergebnisse einen Kanalqualitätsindikator, CQI, umfasst; oder
jedes Messergebnis der x Messergebnisse einen CQI und wenigstens eines der Folgenden umfasst: einen Rang und einen Vorcodierungsmatrixanzeiger, PMI.

3. Verfahren gemäß einem der Ansprüche 1 bis 2, wobei jedes der n Pilotsignale ein Kanalzustandsinformation-Referenzsignal, CSI-RS, ist.

4. System, umfassend:
eine Basisstation, ausgelegt zum:
Bestimmen von m Strahlen und Bestimmen von p Ports entsprechend den m Strahlen, wobei sowohl m als auch p positive Ganzzahlen größer als 1 sind; und
Senden von n Pilotsignalen an ein Benutzer-Equipment UE, über q Gruppen von Ports, wobei die q Gruppen erhalten werden, indem die p Ports gemäß Richtungen von m Strahlen und basierend darauf, dass jede Gruppe n Ports umfasst, gruppiert werden, und sowohl n als auch q positive Ganzzahlen größer als 1 sind; und der i-te Port in jeder Gruppe dafür ausgelegt ist, das i-te Pilotsignal in den n Pilotsignalen zu senden, wobei 1≤i≤n und i eine positive Ganzzahl ist; und
das Benutzer-Equipment, ausgelegt zum:
Empfangen einer Signalisierung von der Basisstation, wobei die Signalisierung dazu verwendet wird, x Pilotsignalkonfigurationen entsprechend den q Gruppen von Ports anzuzeigen, jede Gruppe der q Gruppen zu x Untergruppen gruppiert ist, jede Untergruppe y Ports umfasst, die j-te Untergruppe in jeder Gruppe der j-ten Pilotsignalkonfiguration in den x Pilotsignalkonfigurationen entspricht und die Pilotsignalkonfiguration dazu verwendet wird, eine Zeit-Frequenz-Ressource anzuzeigen, die durch ein Pilotsignal belegt ist, wobei sowohl x als auch y positive Ganzzahlen größer oder gleich 1 sind, 1≤i≤x und j eine positive Ganzzahl ist;
Empfangen der n Pilotsignale von der Basisstation über die q Gruppen von Ports;
Messen der n Pilotsignale durch Messen der n Pilotsignale in Zeit-Frequenz-Ressourcen, die jeweils durch die x Pilotsignalkonfigurationen angezeigt werden, um x Messergebnisse zu erhalten;
Senden von Messinformationen an die Basisstation, wobei die Messinformationen die x Messergebnisse umfassen; und
Empfangen, unter Verwendung eines Datenübertragungsstrahls, von Daten von der Basisstation, wobei der Datenübertragungsstrahl durch die Basisstation gemäß den Messinformationen und der empfangenen "Uplink"-Leistung der q Gruppen von Ports bestimmt wird.

5. System gemäß Anspruch 4, wobei das Pilotsignal ein Kanalzustandsinformation-Referenzsignal, CSI-RS, ist.

## Revendications

1. Procédé de transmission de signal pilote, comprenant :
la réception (510) de n signaux pilotes envoyés par une station de base par l'intermédiaire de q groupes de ports, les q groupes étant obtenus par la station de base en regroupant, sur la base du fait que chaque groupe comprend n ports, p ports en les q groupes selon les directions de m faisceaux, m et p sont tous deux des entiers positifs supérieurs à 1, et n et q sont tous deux des entiers positifs supérieurs à 1 ; et le i^{ème} port dans chaque groupe est configuré pour envoyer le i^{ème} signal pilote dans les n signaux pilotes, 1 ≤ i ≤ n, et i étant un entier positif ; et
la mesure (520) des n signaux pilotes,
avant de recevoir n signaux pilotes d'une station de base par l'intermédiaire de q groupes de ports, le procédé comprenant en outre :
la réception d'une signalisation en provenance de la station de base, la signalisation étant utilisée pour indiquer x configurations de signaux pilotes correspondant aux q groupes de ports, chaque groupe des q groupes étant regroupé en x sous-groupes, chaque sous-groupe comprenant y ports, le j^{ème} sous-groupe dans chaque groupe correspondant à la j^{ème} configuration de signal pilote dans les x configurations de signaux pilotes, et la configuration de signal pilote étant utilisée pour indiquer une ressource temps-fréquence occupée par un signal pilote, x et y étant tous deux des entiers positifs supérieurs ou égaux à 1, 1 ≤ j ≤ x, et j étant un entier positif,
la mesure des n signaux pilotes comprenant :
la mesure des n signaux pilotes sur les ressources temps-fréquence respectivement indiquées par les x configurations de signaux pilotes, pour obtenir x résultats de mesure ; et
le procédé comprenant en outre :
l'envoi d'informations de mesure à la station de base, les informations de mesure comprenant les x résultats de mesure ; et
la réception, au moyen d'un faisceau de transmission de données, de données provenant de la station de base, le faisceau de transmission de données étant déterminé par la station de base en fonction des informations de mesure et de la puissance de liaison montante reçue des q groupes de ports.

2. Procédé selon la revendication 1, chaque résultat de mesure des x résultats de mesure comprenant un indicateur de qualité de canal, CQI ; ou
chaque résultat de mesure des x résultats de mesure comprenant un CQI, et au moins un des éléments suivants : un rang et un indicateur de matrice de précodage, PMI.

3. Procédé selon l'une quelconque des revendications 1 et 2, chacun des n signaux pilotes étant un signal de référence d'informations sur l'état du canal, CSI-RS.

4. Système, comprenant : une station de base, configurée pour :
déterminer m faisceaux, et déterminer p ports correspondant aux m faisceaux, m et p étant tous deux des entiers positifs supérieurs à 1 ; et,
envoyer n signaux pilotes à un équipement utilisateur, UE, par l'intermédiaire de q groupes de ports, les q groupes étant obtenus en regroupant les p ports selon les directions de m faisceaux et sur la base du fait que chaque groupe comprend n ports, et que n et q sont tous deux des entiers positifs supérieurs à 1 ; et le i^{ème} port dans chaque groupe est configuré pour envoyer le i^{ème} signal pilote dans les n signaux pilotes, 1 ≤ i ≤ n et i étant un entier positif ; et
l'équipement utilisateur configuré pour :
recevoir une signalisation de la station de base, la signalisation étant utilisée pour indiquer x configurations de signaux pilotes correspondant aux q groupes de ports, chaque groupe des q groupes étant regroupé en x sous-groupes, chaque sous-groupe comprenant y ports, le j^{ème} sous-groupe dans chaque groupe correspondant à la j^{ème} configuration de signal pilote dans les x configurations de signaux pilotes, et la configuration de signal pilote étant utilisée pour indiquer une ressource temps-fréquence occupée par un signal pilote, x et y étant tous deux des entiers positifs supérieurs ou égaux à 1, 1 ≤ j ≤ x, et j étant un entier positif ;
recevoir les n signaux pilotes de la station de base par l'intermédiaire des q groupes de ports ;
mesurer les n signaux pilotes en mesurant les n signaux pilotes sur les ressources temps-fréquence respectivement indiquées par les x configurations de signaux pilotes, pour obtenir x résultats de mesure ;
envoyer des informations de mesure à la station de base, les informations de mesure comprenant les x résultats de mesure ; et
recevoir, en utilisant un faisceau de transmission de données, des données provenant de la station de base, le faisceau de transmission de données étant déterminé par la station de base en fonction des informations de mesure et de la puissance de liaison montante reçue des q groupes de ports.

5. Système selon la revendication 4, le signal pilote étant un signal de référence d'information d'état de canal, CSI-RS.
